# EUROPEAN PATENT SPECIFICATION

(11) **EP 2 506 542 B1**
(45) Date of publication and mention of the grant of the patent: **18.09.2019**
(21) Application number: 11160256.1
(22) Date of filing: 29.03.2011
(51) Int. Cl.: H04M 1/725, H04W 52/02, G06F 1/3234, G06K 7/10, G06K 19/07, H04W 4/50, H04W 4/80

(54) **Mobile wireless communications device having a near field communication (NFC) device and providing memory disabling and related methods**
Mobile drahtlose Kommunikationsvorrichtung mit Nahfeldkommunikationsvorrichtung und Bereitstellung der Speicherdeaktivierung und zugehörige Verfahren
Dispositif de communication mobile sans fil disposant d'un dispositif de communications de champ proche et procédés apparentés

(43) Date of publication of application: 03.10.2012
(73) Proprietor: BlackBerry Limited, Waterloo, ON N2K 0A7 (CA)
(72) Inventor: Krutt, Gereon, 44799, Bochum (DE); Matton, Maxime, Waterloo Ontario N2L 3W8 (CA); Carbonell Duque, Santiago, Bogota (CO)
(74) Representative: Noble, Nicholas

(56) References cited:
- WO-A2-2009/082126
- JP-A- 2009 230 410
- US-A1- 2008 011 833

## Description

### Technical Field

This application relates to the field of communications, and more particularly, to wireless communications systems and related methods.

### Background

Mobile communication systems continue to grow in popularity and have become an integral part of both personal and business communications. Various mobile devices now incorporate Personal Digital Assistant (PDA) features such as calendars, address books, task lists, calculators, memo and writing programs, media players, games, etc. These multi-function devices usually allow electronic mail (email) messages to be sent and received wirelessly, as well as access the internet via a cellular network and/or a wireless local area network (WLAN), for example.

Some mobile devices incorporate contactless card technology and/or near field communication (NFC) chips. NFC technology is commonly used for contactless short-range communications based on radio frequency identification (RFID) standards, using magnetic field induction to enable communication between electronic devices, including mobile wireless communications devices. This short-range high frequency wireless communications technology exchanges data between devices over a short distance, such as only a few centimeters.

US 2008/0011833 is directed to a mobile terminal including a secure element, a main controlling unit, and a near-field-communication module. A detection is made by the main control unit to determine when communication between the secure element and an external device has ceased.

JP 2009-230410 discloses an information processor in which a main program P1 including a remap instruction and a jump instruction is recorded in a first memory. A sub-program P2 including the remap instruction and the jump instruction is recorded in a second memory. A CPU executes a program of one memory selected from among the first and second memories. A bus exchanges data between the first and second memories and 12, and the CPU. The CPU selects the first memory and executes the main program P1 (state 1). Then, the CPU changes a memory for executing the program to the second memory by the remap instruction of the selected first memory, then jumps to the sub-program P2 recorded in the changed second memory by the jump instruction of the selected first memory 10 to execute the jumped sub-program P2 (state 2). When shifting from the state 1 to the state 2, the CPU turns off power of the first memory which does not execute the program.

WO 2009/082126 is directed to a mobile terminal and method for providing terminal related information in a power-off state of the terminal. The mobile terminal includes at least one storage unit and a contactless controller configured to receive a request for information related to the mobile terminal from a requesting device in the power-off state, to obtain the requested information from the storage unit in the power-off state, and to transmit the obtained information to the requesting device in the power-off state.

### Brief Description of the Drawings

FIG. 1 is a schematic block diagram of a communications system in accordance with an example embodiment.
FIG. 2 is a schematic diagram of the communications system of FIG. 1 showing the display of the mobile device.
FIG. 3 is a flow diagram illustrating example method aspects associated with the system and devices of FIGS. 1-2.
FIG. 4 is a schematic block diagram illustrating example mobile wireless communications device components that may be used with the devices of FIGS. 1 and 2.

### Detailed Description

The present description is made with reference to the accompanying drawings, in which embodiments are shown. However, many different embodiments may be used, and thus the description should not be construed as limited to the embodiments set forth herein. Rather, these embodiments are provided so that this disclosure will be thorough and complete. Like numbers refer to like elements throughout.
Generally speaking, a mobile wireless communications device is disclosed herein which may include a wireless transceiver and a processor coupled with the wireless transceiver circuitry. The mobile wireless communication device may also include a near-field communication (NFC) device coupled with the processor, for example. The NFC device may include a
NFC controller, a NFC transceiver coupled with the NFC controller, and a first memory coupled with the NFC controller and capable of storing a first plurality of applications. The mobile wireless communications device may also include a second memory capable of storing a second application, for example. The processor may be configured to select one of the first applications and the second application (e.g., a given application) on a respective one of the first memory and the second memory and to disable the other one of the first memory and the second memory.

The NFC transceiver may be configured to operate using a first NFC communications protocol based upon NFC communications. The processor may be configured to select the given application based upon a match with the first communications protocol, for example.

The mobile wireless communications device may further include a position determining device coupled with the processor which may be configured to determine a geographic location. The processor may be configured to select the given application based upon the geographic location.

The mobile wireless communications device may further include a light sensor coupled with the processor and may be configured to determine a light level. The processor may be configured to select the given application based upon the light level, for example.

The mobile wireless communications device may further include a timer coupled with the processor and may be configured to determine a time. The processor may be configured to select the given application based upon the time, for example.

At least one of the first memory and the second memory may comprise a secure element.

The second memory may be removably coupled to the processor. At least one of the first application and the second application may comprise a financial payment application. At least one of the first application and the second application may also include a secure access application, for example. The second memory may include one of a secure digital memory card or a subscriber identity module, for example.

A related communications system and a method are also provided. The method aspect is directed to a communications method for a mobile wireless communications device that may include wireless transceiver circuitry, a processor coupled with the wireless transceiver circuitry, and a near-field communication (NFC) device coupled with the processor. The NFC device may include a NFC controller, a NFC transceiver coupled with the NFC controller, and a first memory coupled with the NFC controller and capable of storing a first plurality of applications. The mobile wireless communications device may also include a second memory capable of storing a second plurality of applications, for example. The method may include using the processor to select one of the first application and the second application (e.g., a given application) on a respective one of the first memory and the second memory. The method may also include using the processor to disable the other one of the first memory and the second memory, for example.

A related computer-readable medium aspect is directed to a computer-readable medium for use with a mobile wireless communications device, such as the one described briefly above. The computer-readable medium may have computer-executable instructions for causing the mobile wireless communications device to perform various steps. The steps may include selecting one of the first applications and the second application (e.g., a given application) on a respective one of the first memory and the second memory, and disabling the other one of the first memory and the second memory.

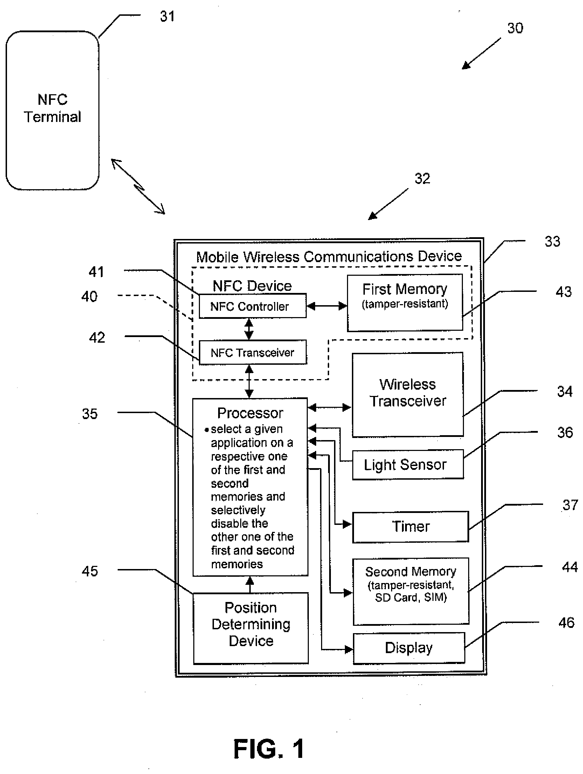

Referring initially to FIGS. 1-2, a communications system **30** illustratively includes a near field communication (NFC) terminal **31** associated with an object, and a mobile wireless communications device **32** (also referred to as a "mobile device" herein). Example mobile wireless communications devices may include portable or personal media players (e.g., music or MP3 players, video players, etc.), portable gaming devices, portable or mobile telephones, smartphones, tablet computers, digital cameras, etc.

The mobile device **32** illustratively includes a portable housing **33** and a wireless transceiver **34** carried by the portable housing **33.** The wireless transceiver **34** may comprise a cellular transceiver or other type of wireless communications transceiver, and may communicate any combination of voice and data, such as, for example, email.

The mobile device **32** includes a display **46** carried by the portable housing **33.** The display **46** may comprise a liquid crystal display (LCD) and may be configured to display information relating to data or voice communications. The display **46** may be in the form of an active display that includes a backlight, for example. The display **46** may display email information, contact information, or call information. The display **46** may be another type of display, for example, a passive display, and may display other information.

The mobile device **32** also includes a processor **35** that is carried by the portable housing **33** and coupled with the wireless transceiver circuitry **34** and the display **46.** The processor **35** may be implemented using hardware (e.g., memory, etc.) and software components, i.e., computer-readable instructions for causing the mobile device **32** to perform the various functions or operations described herein.

The mobile device **32** also includes a NFC device **40** carried by the portable housing and coupled with the processor **35.** The NFC device **40** includes a NFC controller **41** and a NFC transceiver **42** coupled with the NFC controller **41.** The NFC controller **41** and the NFC transceiver **42** advantageously cooperate to perform at least one NFC communication function. For example, the NFC device **40** may communicate with the NFC terminal **31** based upon proximity thereto using NFC communication. The NFC terminal **31** may be a NFC tag, a NFC-enabled mobile device, a smart poster etc.

By way of background, NFC is a short-range wireless communications technology in which NFC-enabled devices are "swiped," "bumped" or otherwise moved in close proximity to communicate. In one non-limiting example implementation, NFC may operate at 13.56 MHz and with an effective range of about 10cm, but other suitable versions of near-field communication which may have different operating frequencies, effective ranges, etc., for example, may also be used.

The NFC device **40** also includes a first memory **43** coupled to the NFC controller **41.** More particularly, the first memory **43** may be embedded within the NFC device hardware or within the NFC integrated circuit (IC). The first memory **43** may be tamper resistant, for example. In other words, the first memory **43** may comprise a secure element. The first memory **43** or secure element, may store applications relating to NFC communications, or contactless applications for communicating with the NFC terminal **31.** For example, the applications may include financial payment applications, secure access system applications, loyalty card applications, and other applications, and may be encrypted. In some example embodiments, the first memory **43** may store only one application.

The mobile device **32** also includes a second memory **44.** The second memory **44** may also be tamper resistant, for example. In other words, the second memory **44** may also be configured to be a "secure element." The second memory **44** or secure element, may store a second set of applications also relating to NFC communications, or contactless applications for communicating with the NFC terminal **31.** For example, the second set of applications may also include financial payment applications, secure access system applications, loyalty card applications, and other applications, and may also be encrypted. In some example embodiments, the second memory 44 may store only one application. The second memory **44** may be part of the universal integrated circuit card (UICC), for example. The second memory **44** may also be removable, and may be a secure-digital (SD) card or a subscriber identity module (SIM) card, for example. The second memory **44** may be another type of memory. Of course, while first and second memories **43, 44** are described herein, more than two memories may be used. In other words, applications, or secure elements, may be stored in or spread over various memory devices. It should also be noted that a secure element may be implemented in a dedicated or secure area of a common memory, for example.

The processor **35** may be configured to select a given application on a respective one of the first and second memories **43, 44** based upon the context of the use or one or more sensors, for example. The processor **35** may also disable the other one of the first and second memories **43, 44** after selecting the given application.

The mobile device **32** may also illustratively include a position determining device **45** coupled to the processor **35,** the position determining device **45** can be configured to determine a geographic position of the mobile wireless communications device **32.** The position determining device **45** may comprise a global position system (GPS) device, for example. The position determining device **45** may comprise another type of position determining device. The processor **35** may be configured to select the given application based upon the geographic position or location.

By way of example, the position determining device **45** may cooperate with the processor **35** to determine whether the mobile device **32** is within the proximity, or within a threshold area, of the NFC terminal **31** that may control a secure area or door, for example, of a building, etc. Based thereon, the processor **35** may advantageously select the (secure element) application that cooperates with the NFC transceiver **42** to provide access to the building, or unlock the door. The application is selected from the appropriate memory that is storing it. The other memory, or memories, may be disabled. This advantageously increases processing speed, for example, as less cycles through the memory may be needed to select an appropriate application to communicate with the NFC terminal **31.** Power consumption may also be reduced as a result. Another advantage is that this may help reduce conflicts between different secure elements attempting to all initially communicate with the NFC terminal.

In another example, the position determining device **45** may cooperate with the processor **35** to determine that the mobile device **32** is outside its "home country." The processor **35** may select a financial payment application designated as a foreign payment application, versus a domestic payment application, or even a default payment application, and disable the memory having the domestic and default financial payment applications stored thereon. More than one financial payment application may be used in more than one determined geographic location.

In one advantageous example embodiment, a table or list of corresponding applications, for example, financial payment applications, and geographic locations may be stored in a memory. The table may be stored in either one of the first and second memories **43, 44,** or another memory (not shown), such as, for example, the device memory. The position determining device **45** may cooperate with the processor **35** to read from the table and select the corresponding application. For example, one application may be selected for a first type of service or goods, for example, a grocery store, a second application for a second type of store, for example, a gas station, and so forth. Many different categories of applications may be set to correspond to any number of applications and geographic locations. The table may include other types of data. The memory or memories not having the selected given application may be disabled.

In some example embodiments, the mobile device **32** includes a light sensor **36** coupled to the processor **35,** the light sensor **36** may be configured to determine a light level. The processor **35** may be configured to select the given application based upon the light level.

For example, the light sensor **36** may cooperate with the processor **35** to determine whether it is dark outside. Based upon the darkness, the processor **35** may select the application that may cooperate with the NFC transceiver **42** to control a secure area or door, for example, of a bank automated teller machine (ATM) access door. The processor **35** advantageously selects the (secure element) application that cooperates with the NFC transceiver **42** to provide access to the ATM, or unlock the door. The application is selected from the appropriate memory. The other memory, or memories, not having the selected application may be disabled. The processor **35** may cooperate with the light sensor **36** to select a given application based upon other sensed light conditions, for example, whether the light level is above a threshold level. Indeed, the light sensor **36** may be used in conjunction with the position determining device **45** so that the processor **35** selects the given application based upon both the light level and the geographic position.

In some example embodiments, the mobile device **32** includes a timer or clock **37** coupled to the processor, the timer **37** may be configured to determine a time. The processor **35** may be additionally or alternatively configured to select the given application based upon the time.

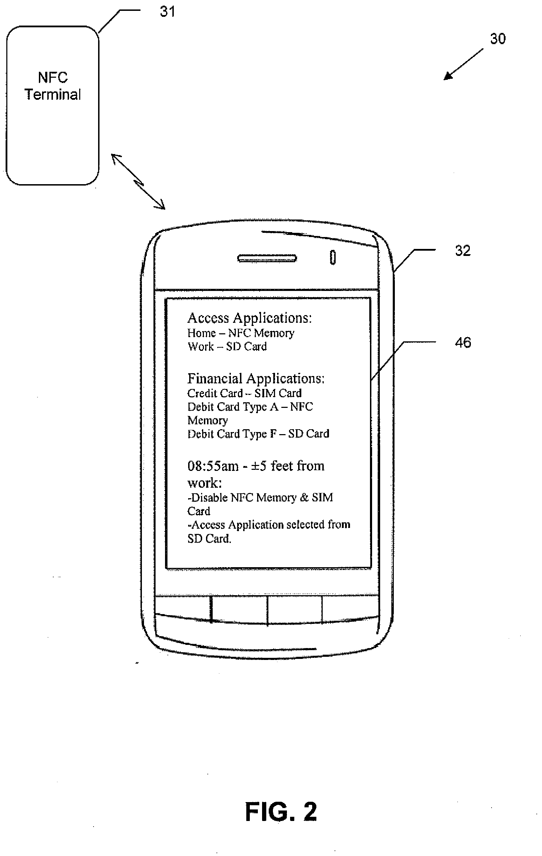

For example, the timer **37** may cooperate with the processor **35** to determine the time of day. Based upon the time of day, the processor **35** may select the application that may cooperate with the NFC transceiver **42** to control a secure area or door, for example. More particularly, the processor **35** may select, from one of the first and second memories **43, 44,** the application that cooperates with the NFC transceiver **42** to provide access to an office building (work) between the hours of 8 a.m. and 9 a.m. (FIG. 2) and to provide access to a home between the hours of 4 p.m. and 6 p.m. The application is selected from the appropriate memory. The other memory, or memories, for example, the NFC memory and a SIM card memory (not shown), not having the selected application may be disabled. In some example embodiments, the timer **37** may be used in conjunction with one or more of the position determining device **45** and the light sensor **36** so that the processor **35** selects the given application based upon one or more of the time, the light level and, the geographic position. Other sensors or input devices may be used and may cooperate with the processor **35** to select the given application. In accordance with another example aspect, a satellite position determining device (e.g., GPS, etc.) may be used to determine proximity to a restaurant, store, etc., and this can trigger selection of an appropriate memory or secure element (e.g., for coupons or rewards points to be redeemed, etc.).

In contrast to prior approaches where management of the applications was performed manually over the air or via a user interface, the processor **35** cooperates with one or more of the position determining device **45,** the timer **37,** the light sensor **36,** and any other sensors to predict which application will be used next. The application may be selected based thereon and the memory or memories not having the given selected application stored thereon may be disabled. In other words, management of the applications may be limited to an initial set up. Moreover, the application selected by the processor **35** along with a listing of available applications may be displayed on the display **46** (FIG. 2). This information may not be displayed in some embodiments.

In yet another advantageous example embodiment, the NFC transceiver **42** may be configured to operate using a first NFC communications protocol based upon NFC communications, for example, with the NFC terminal **31.** Each application has a respective NFC communications protocol associated therewith. For example, the NFC transceiver **42** may be configured to communicate with the NFC terminal **31** via the NFC type "A," protocol and the first memory **43** (NFC memory) may have an application stored thereon configured to operate via the NFC type "B" protocol, while the second memory **44** may have applications stored thereon configured to operate via the NFC type "F" and the NFC type "A" protocols. The processor **35** is configured to advantageously select the given application based upon a match with the first communications protocol.

In other words, in the above example, the processor **35** may select the application configured to operate via the NFC type "A" protocol stored on the second memory **44,** and the processor is configured to disable the first memory **43.** Of course, the applications may be task specific applications, for example, financial applications, and may be stored in one or both of the first and second memories **43, 44** or additional memories. Indeed, selecting the given application based upon a match with the first NFC protocol may advantageously increase processing speed by reducing the number of cycles. More particularly, the processor **35** may not have to search all the memories or cooperate with the applications to find out which applications may not be compatible with the NFC terminal **31.**

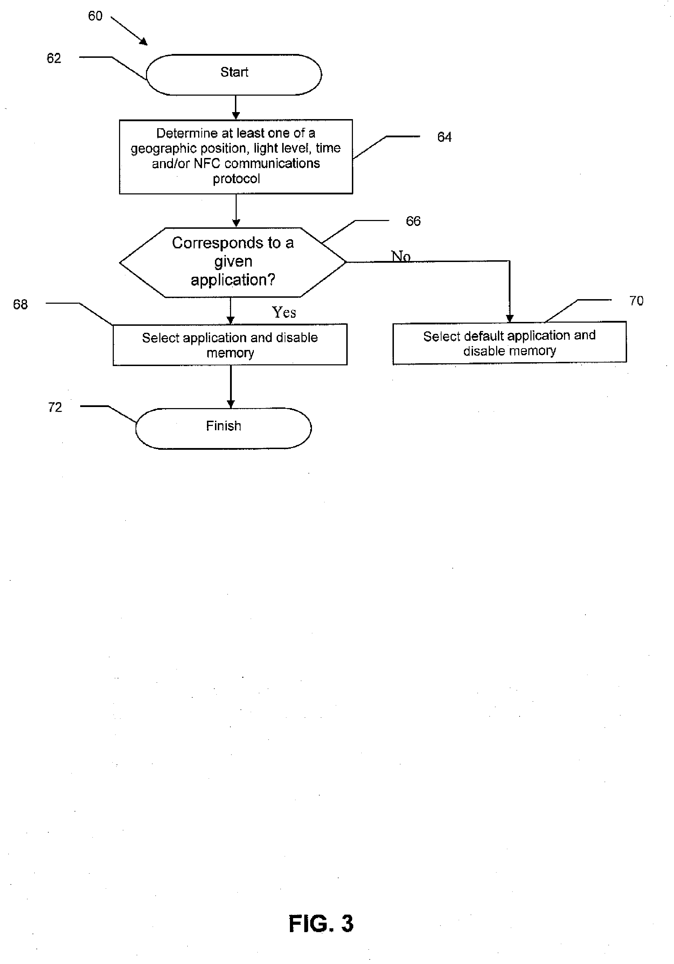

Referring now to the flowchart **60** of FIG. 3, related method aspects are now described. Beginning at Block **62,** the processor **35** cooperates with at least one of the position determining device **45,** the light sensor **36,** and the timer **37** to determine at least one of a geographic position, a light level, and a time, respectively (Block **64**). A first NFC protocol is determined by operation of the NFC transceiver **42** with the NFC terminal **31** also at Block **64.** At Block **66,** the processor **35** determines whether one or more of the geographic position, light level, time, and NFC protocol correspond to a given application (secure element) (i.e., which secure element is appropriate given the current geographic position, light level, time, or NFC protocol being used). If there is a match between an application stored on one of first and second memories **43, 44,** the processor **35,** at Block **68,** selects the application and disables the memory not storing the application. If there is no match between an application stored on one of first and second memories **43, 44,** the processor **35,** at Block **70,** selects the default application and disables the memory not storing the default application. The method ends at Block **72.**

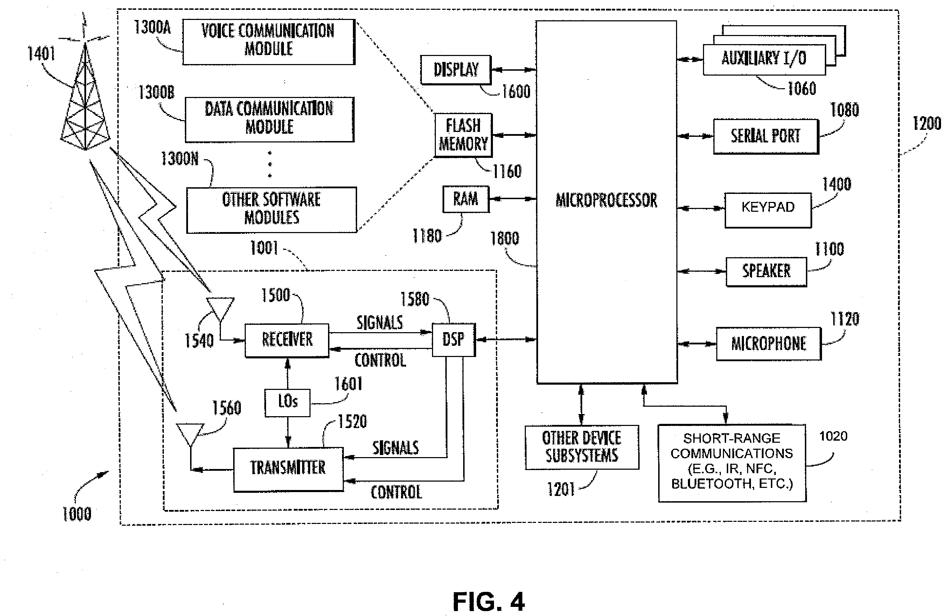

Example components of a mobile wireless communications device **1000** that may be used in accordance with the above-described embodiments are further described below with reference to FIG. 4. The device **1000** illustratively includes a housing **1200,** a keyboard or keypad **1400** and an output device **1600.** The output device shown is a display **1600,** which may comprise a full graphic LCD. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400.**

The housing **1200** may be elongated vertically, or may take on other sizes and shapes (including clamshell housing structures). The keypad may include a mode selection key, or other hardware or software for switching between text entry and telephony entry.

In addition to the processing device **1800,** other parts of the mobile device **1000** are shown schematically in FIG. 4. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-way RF communications device having data and, optionally, voice communications capabilities. In addition, the mobile device **1000** may have the capability to communicate with other computer systems via the Internet.

Operating system software executed by the processing device **1800** is stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM **1180.**

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items. The PIM application may also be capable of sending and receiving data items via a wireless network **1401.** The PIM data items may be seamlessly integrated, synchronized and updated via the wireless network **1401** with corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter **1520,** and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, WCDMA, PCS, GSM, EDGE, etc. Other types of data and voice networks, both separate and integrated, may also be utilized with the mobile device **1000.** The mobile device **1000** may also be compliant with other communications standards such as 3GSM, 3GPP, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore typically involves use of a subscriber identity module, commonly referred to as a SIM card, in order to operate on a GPRS network.

When required network registration or activation procedures have been completed, the mobile device **1000** may send and receive communications signals over the communication network **1401.** Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520.** For example, gains applied to communications signals in the receiver **1500** and transmitter **1520** may be adaptively controlled through automatic gain control algorithms implemented in the DSP **1580.**

In a data communications mode, a received signal, such as a text message or web page download, is processed by the communications subsystem **1001** and is input to the processing device **1800.** The received signal is then further processed by the processing device **1800** for an output to the display **1600,** or alternatively to some other auxiliary I/O device **1060.** A device may also be used to compose data items, such as e-mail messages, using the keypad **1400** and/or some other auxiliary I/O device **1060,** such as a touchpad, a rocker switch, a thumb-wheel, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, a Bluetooth™ communications module to provide for communication with similarly-enabled systems and devices, or a near field communications (NFC) sensor for communicating with a NFC device or NFC tag via NFC communications.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. A mobile wireless communications device (32) comprising:
a wireless transceiver (34);
a processor (35) coupled with said wireless transceiver;
a near-field communication (NFC) device (40) coupled with said processor, the NFC device comprising
a NFC controller (41),
a NFC transceiver (42) coupled with said NFC controller,and
a first memory (43) coupled with said NFC controller, the first memory being arranged to store a first application; and
a second memory (44) arranged to store a second application;
said processor being configured to select between the first application and the second application on a respective one of the first memory and the second memory and to disable the other one of the first memory and the second memory.

2. The mobile wireless communications device (32) of Claim 1, wherein the NFC transceiver (42) is configured to operate using a first NFC communications protocol; and wherein the processor (35) is configured to select one of the first application and the second application based upon a match with the first NFC communications protocol.

3. The mobile wireless communications device (32) of Claim 1 further comprising a position determining device (45) coupled with said processor (35), the position determining device being configured to determine a geographic location of the mobile wireless communications device; and wherein said processor is configured to select one of the first application and the second application based upon the geographic location.

4. The mobile wireless communications device (32) of Claim 1 further comprising a light sensor (36) coupled with said processor (35), the light sensor being configured to determine a light level; and wherein said processor is configured to select one of the first application and the second application based upon the light level.

5. The mobile wireless communications device (32) of Claim 1 further comprising a timer (37) coupled with said processor (35), the timer being configured to determine a time; and wherein said processor is configured to select one of the first application and the second application based upon the time.

6. The mobile wireless communications device (32) of Claim 1 wherein at least one of the first memory (43) and the second memory (44) comprises a secure element.

7. The mobile wireless communications device (32) of Claim 1 wherein said second memory (44) is removably coupled with said processor (35).

8. The mobile wireless communications device (32) of Claim 1 wherein at least one of the first application and the second application comprises a financial payment application.

9. The mobile wireless communications device (32) of Claim 1 wherein at least one of the first application and the second application comprises a secure access application.

10. The mobile wireless communications device (32) of Claim 1 wherein said second memory (44) comprises one of a secure digital memory card and a subscriber identity module.

11. A communications method for a mobile wireless communications device (32) comprising a wireless transceiver (34), a processor (35) coupled with the wireless transceiver, a near-field communication (NFC) device (340) coupled with the processor and comprising a NFC controller (41), a NFC transceiver (42) coupled with the NFC controller, and a first memory (43) coupled with the NFC controller and arranged to store a first application, the mobile wireless communications device also comprising a second memory (44) arranged to store a second application, the method comprising:
using the processor to select between the first application and the second application on a respective one of the first memory and the second memory; and
using the processor to disable the other one of the first memory and the second memory.

12. The method of Claim 11 further comprising operating the NFC transceiver (42) using a first NFC communications protocol based upon NFC communications; and using the processor (35) to select one of the first application and the second application based upon a match with the first NFC communications protocol.

13. The method of Claim 11 further comprising determining a geographic position based upon a position determining device (45) coupled with the processor (35) and selecting one of the first application and the second application based upon the geographic location.

14. The method of Claim 11 further comprising determining a light level based upon a light sensor (36) coupled with the processor (35) and selecting one of the first application and the second application based upon the light level.

15. The method of Claim 11 further comprising determining a time based upon a timer (37) coupled with the processor (35) and selecting one of the first application and the second application based upon the time.

## Patentansprüche

1. Mobile drahtlose Kommunikationseinrichtung (32), die Folgendes umfasst:
eine drahtlose Sende-/Empfangseinrichtung (34);
einen Prozessor (35), der an die drahtlose Sende-/Empfangseinrichtung gekoppelt ist;
eine Nahfeldkommunikationseinrichtung (NFC-Einrichtung) (40), die an den Prozessor gekoppelt ist, wobei die NFC-Einrichtung Folgendes umfasst:
eine NFC-Steuereinheit (41),
eine NFC-Sende-/Empfangseinrichtung (42), die an die NFC-Steuereinheit gekoppelt ist, und
einen ersten Speicher (43), der an die NFC-Steuereinheit gekoppelt ist, wobei der erste Speicher ausgelegt ist, eine erste Anwendung zu speichern; und
einen zweiten Speicher (44), der ausgelegt ist, eine zweite Anwendung zu speichern; wobei
der Prozessor konfiguriert ist, zwischen der ersten Anwendung und der zweiten Anwendung im ersten Speicher bzw. im zweiten Speicher zu wählen und den anderen des ersten Speichers und des zweiten Speichers zu deaktivieren.

2. Mobile drahtlose Kommunikationseinrichtung (32) nach Anspruch 1, wobei die NFC-Sende-/Empfangseinrichtung (42) konfiguriert ist, unter Verwendung eines ersten NFC-Kommunikationsprotokolls zu arbeiten; und der Prozessor (35) konfiguriert ist, die erste Anwendung oder die zweite Anwendung auf der Grundlage einer Übereinstimmung mit dem ersten NFC-Kommunikationsprotokoll zu wählen.

3. Mobile drahtlose Kommunikationseinrichtung (32) nach Anspruch 1, die ferner eine Positionsbestimmungseinrichtung (45), die an den Prozessor (35) gekoppelt ist, umfasst, wobei die Positionsbestimmungseinrichtung konfiguriert ist, eine geographische Position der mobilen drahtlosen Kommunikationseinrichtung zu bestimmen; und der Prozessor konfiguriert ist, die erste Anwendung oder die zweite Anwendung auf der Grundlage der geographischen Position zu wählen.

4. Mobile drahtlose Kommunikationseinrichtung (32) nach Anspruch 1, die ferner einen Lichtsensor (36) umfasst, der an den Prozessor (35) gekoppelt ist, wobei der Lichtsensor konfiguriert ist, einen Lichtpegel zu bestimmen; und der Prozessor konfiguriert ist, die erste Anwendung oder die zweite Anwendung auf der Grundlage des Lichtpegels zu wählen.

5. Mobile drahtlose Kommunikationseinrichtung (32) nach Anspruch 1, die ferner einen Zeitgeber (37) umfasst, der an den Prozessor (35) gekoppelt ist, wobei der Zeitgeber konfiguriert ist, eine Zeit zu bestimmen; und der Prozessor konfiguriert ist, die erste Anwendung oder die zweite Anwendung auf der Grundlage der Zeit zu wählen.

6. Mobile drahtlose Kommunikationseinrichtung (32) nach Anspruch 1, wobei der erste Speicher (43) und/oder der zweite Speicher (44) ein sicheres Element umfassen.

7. Mobile drahtlose Kommunikationseinrichtung (32) nach Anspruch 1, wobei der zweite Speicher (44) abnehmbar an den Prozessor (35) gekoppelt ist.

8. Mobile drahtlose Kommunikationseinrichtung (32) nach Anspruch 1, wobei die erste Anwendung und/oder die zweite Anwendung eine finanzielle Zahlungsanwendung umfassen.

9. Mobile drahtlose Kommunikationseinrichtung (32) nach Anspruch 1, wobei die erste Anwendung und/oder die zweite Anwendung eine sichere Zugangsanwendung umfassen.

10. Mobile drahtlose Kommunikationseinrichtung (32) nach Anspruch 1, wobei der zweite Speicher (44) eine sichere digitale Speicherkarte und/oder ein Teilnehmeridentitätsmodul umfassen.

11. Kommunikationsverfahren für eine mobile drahtlose Kommunikationseinrichtung (32), die eine drahtlose Sende-/Empfangseinrichtung (34), einen Prozessor (35), der an die drahtlose Sende-/Empfangseinrichtung gekoppelt ist, eine Nahfeldkommunikationseinrichtung (NFC-Einrichtung) (340), die an den Prozessor gekoppelt ist und eine NFC-Steuereinheit (41) umfasst, eine NFC-Sende-/Empfangseinrichtung (42), die an die NFC-Steuereinheit gekoppelt ist, und einen ersten Speicher (43), der an die NFC-Steuereinheit gekoppelt ist und ausgelegt ist, eine erste Anwendung zu speichern, umfasst, wobei die mobile drahtlose Kommunikationseinrichtung außerdem einen zweiten Speicher (44) umfasst, der ausgelegt ist, eine zweite Anwendung zu speichern, und das Verfahren Folgendes umfasst:
Verwenden des Prozessors, um zwischen der ersten Anwendung und der zweiten Anwendung im ersten Speicher bzw. im zweiten Speicher zu wählen; und
Verwenden des Prozessors, um den anderen des ersten Speichers und des zweiten Speichers zu deaktivieren.

12. Verfahren nach Anspruch 11, das ferner ein Betreiben der NFC-Sende-/Empfangseinrichtung (42) unter Verwendung eines ersten NFC-Kommunikationsprotokolls auf der Grundlage von NFC-Kommunikationen und ein Verwenden des Prozessors (35), um die erste Anwendung oder die zweite Anwendung auf der Grundlage einer Übereinstimmung mit dem ersten NFC-Kommunikationsprotokoll zu wählen, umfasst.

13. Verfahren nach Anspruch 11, das ferner ein Bestimmen einer geographischen Position auf der Grundlage einer Positionsbestimmungseinrichtung (45), die an den Prozessor (35) gekoppelt ist, und ein Wählen der ersten Anwendung oder der zweiten Anwendung auf der Grundlage der geographischen Position umfasst.

14. Verfahren nach Anspruch 11, das ferner ein Bestimmen eines Lichtpegels auf der Grundlage eines Lichtsensor (36), der an den Prozessor (35) gekoppelt ist, und ein Wählen der ersten Anwendung oder der zweiten Anwendung auf der Grundlage des Lichtpegels umfasst.

15. Verfahren nach Anspruch 11, das ferner ein Bestimmen einer Zeit auf der Grundlage eines Zeitgebers (37), der an den Prozessor (35) gekoppelt ist, und ein Wählen der ersten Anwendung oder der zweiten Anwendung auf der Grundlage der Zeit umfasst.

## Revendications

1. Dispositif de communications mobile sans fil (32) comprenant :
un émetteur-récepteur sans fil (34) ;
un processeur (35) couplé audit émetteur-récepteur sans fil ;
un dispositif de communication en champ proche (NFC) (40) couplé audit processeur, le dispositif NFC comprenant
une unité de commande NFC (41),
un émetteur-récepteur NFC (42) couplé à ladite unité de commande NFC, et
une première mémoire (43) couplée à ladite unité de commande NFC, la première mémoire étant conçue pour stocker une première application ; et
une deuxième mémoire (44) conçue pour stocker une deuxième application ;
ledit processeur étant configuré pour faire une sélection entre la première application et la deuxième application sur l'une respective de la première mémoire et de la deuxième mémoire et pour désactiver l'autre de la première mémoire et de la deuxième mémoire.

2. Dispositif de communications mobile sans fil (32) de la revendication 1, dans lequel l'émetteur-récepteur NFC (42) est configuré pour fonctionner en utilisant un premier protocole de communications NFC; et dans lequel le processeur (35) est configuré pour sélectionner l'une de la première application et de la deuxième application sur la base d'une correspondance avec le premier protocole de communications NFC.

3. Dispositif de communications mobile sans fil (32) de la revendication 1, comprenant en outre un dispositif de détermination de position (45) couplé audit processeur (35), le dispositif de détermination de position étant configuré pour déterminer un emplacement géographique du dispositif de communications mobile sans fil; et dans lequel ledit processeur est configuré pour sélectionner l'une de la première application et de la deuxième application sur la base de l'emplacement géographique.

4. Dispositif de communications mobile sans fil (32) de la revendication 1, comprenant en outre un capteur de lumière (36) couplé audit processeur (35), le capteur de lumière étant configuré pour déterminer un niveau de lumière ; et dans lequel ledit processeur est configuré pour sélectionner l'une de la première application et de la deuxième application sur la base du niveau de lumière.

5. Dispositif de communications mobile sans fil (32) de la revendication 1, comprenant en outre un temporisateur (37) couplé audit processeur (35), le temporisateur étant configuré pour déterminer un temps ; et dans lequel ledit processeur est configuré pour sélectionner l'une de la première application et de la deuxième application sur la base du temps.

6. Dispositif de communications mobile sans fil (32) de la revendication 1, dans lequel au moins l'une de la première mémoire (43) et de la deuxième mémoire (44) comprend un élément sécurisé.

7. Dispositif de communications mobile sans fil (32) de la revendication 1, dans lequel ladite deuxième mémoire (44) est couplée de manière amovible audit processeur (35).

8. Dispositif de communications mobile sans fil (32) de la revendication 1, dans lequel au moins l'une de la première application et de la deuxième application comprend une application de paiement financier.

9. Dispositif de communications mobile sans fil (32) de la revendication 1, dans lequel au moins l'une de la première application et de la deuxième application comprend une application d'accès sécurisé.

10. Dispositif de communications mobile sans fil (32) de la revendication 1, dans lequel ladite deuxième mémoire (44) comprend l'un parmi une carte mémoire numérique sécurisée et un module d'identité d'abonné.

11. Procédé de communications pour un dispositif de communications mobile sans fil (32) comprenant un émetteur-récepteur sans fil (34), un processeur (35) couplé à l'émetteur-récepteur sans fil, un dispositif de communication en champ proche (NFC) (340) couplé au processeur et comprenant une unité de commande NFC (41), un émetteur-récepteur NFC (42) couplé à l'unité de commande NFC, et une première mémoire (43) couplée à l'unité de commande NFC et conçue pour stocker une première application, le dispositif de communications mobile sans fil comprenant également une deuxième mémoire (44) conçue pour stocker une deuxième application, le procédé comprenant les étapes consistant à :
utiliser le processeur pour faire une sélection entre la première application et la deuxième application sur l'une respective de la première mémoire et de la deuxième mémoire ; et
utiliser le processeur pour désactiver l'autre de la première mémoire et de la deuxième mémoire.

12. Procédé de la revendication 11, comprenant en outre les étapes consistant à mettre en fonctionnement l'émetteur-récepteur NFC (42) en utilisant un premier protocole de communications NFC sur la base de communications NFC ; et à utiliser le processeur (35) pour sélectionner l'une de la première application et de la deuxième application sur la base d'une correspondance avec le premier protocole de communications NFC.

13. Procédé de la revendication 11, comprenant en outre les étapes consistant à déterminer une position géographique sur la base d'un dispositif de détermination de position (45) couplé au processeur (35) et à sélectionner l'une de la première application et de la deuxième application sur la base de l'emplacement géographique.

14. Procédé de la revendication 11, comprenant en outre les étapes consistant à déterminer un niveau de lumière sur la base d'un capteur de lumière (36) couplé au processeur (35) et à sélectionner l'une de la première application et de la deuxième application sur la base du niveau de lumière.

15. Procédé de la revendication 11, comprenant en outre les étapes consistant à déterminer un temps sur la base d'un temporisateur (37) couplé au processeur (35) et à sélectionner l'une de la première application et de la deuxième application sur la base du temps.
